# EUROPÄISCHE PATENTANMELDUNG

(11) **EP 2 530 485 A1**
(43) Veröffentlichungstag der Anmeldung: **05.12.2012**
(21) Anmeldenummer: 11004450.0
(22) Anmeldetag: 31.05.2011
(51) Int. Cl.: G01S 7/51, G01S 17/02, G01S 17/10

(54) **Optischer Sensor zum Nachweis von Objekten und Verfahren zum optischen Anzeigen von Informationen**

(71) Anmelder: Pepperl & Fuchs GmbH, 68307 Mannheim (DE)
(72) Erfinder: Satzky, Uwe, 22455 Hamburg (DE); Tabel, Ernst, 22337 Hamburg (DE)
(74) Vertreter: Schiffer, Axel Martin

(57) **Zusammenfassung**

Die Erfindung betrifft einen optischen Sensor zum Nachweis von Objekten in einem Überwachungsbereich nach dem Laufzeitprinzip mit einer Lichtquelle zum Aussenden von Sendelichtpulsen in den Überwachungsbereich, mit einer Dreheinrichtung zum Drehen einer Strahlrichtung der Sendelichtpulse um eine quer zur Strahlrichtung orientierte Rotationsachse, mit einem Detektor zum Nachweisen von Lichtpulsen, die von Objekten im Überwachungsbereich zurückgestrahlt werden, und mit einer Steuer- und Auswerteeinheit zum Ansteuern der Lichtquelle, zum Auswerten der von dem Detektor nachgewiesenen Lichtpulse und zum Bestimmen eines Objektabstands aufgrund einer gemessenen Laufzeit der Lichtpulse. Der optische Sensor ist dadurch gekennzeichnet, dass an dem Rotor eine optische Anzeigeeinheit zum Anzeigen von Status- und/oder Messinformationen angeordnet ist und dass die Steuer- und Auswerteeinheit für das Anzeigen der Status- und/oder Messinformationen zum phasenrichtigen Aktivieren der optischen Anzeigeeinheit bei drehendem Rotor eingerichtet ist. Die Erfindung betrifft außerdem ein Verfahren zum optischen Anzeigen von Informationen mit einem optischen Sensor nach dem Laufzeitprinzip.

## Beschreibung

Die vorliegende Erfindung betrifft in einem ersten Gesichtspunkt einen optischen Sensor zum Nachweis von Objekten in einem Überwachungsbereich nach dem Laufzeitprinzip gemäß dem Oberbegriff des Anspruchs 1.

In einem weiteren Gesichtspunkt bezieht sich die Erfindung auf ein Verfahren zum optischen Anzeigen von Informationen mit einem optischen Sensor nach dem Laufzeitprinzip.

Ein gattungsgemäßer optischer Sensor ist beispielsweise beschrieben in EP 2 237 063 A1 und weist folgende Komponenten auf: Eine Lichtquelle zum Aussenden von Sendelichtpulsen in den Überwachungsbereich, eine Dreheinrichtung zum Drehen einer Strahlrichtung der Sendelichtpulse um eine quer zur Strahlrichtung orientierte Rotationsachse, einen Detektor zum Nachweisen von Lichtpulsen, die von Objekten im Überwachungsbereich zurückgestrahlt werden, und eine Steuer- und Auswerteeinheit zum Ansteuern der Lichtquelle, zum Auswerten der von dem Detektor nachgewiesenen Lichtpulse und zum Bestimmen eines Objektabstands aufgrund einer gemessenen Laufzeit der Lichtpulse.

Bei bekannten optischen Sensoren dieser Art erfolgt eine Anzeige von Status- und/oder Messinformationen über separate Anzeigeeinrichtungen.

Aus WO 2004/049600 A1 ist ein rotierendes LED-Display bekannt, bei dem auf Grundlage von Daten, die von außen zugeführt werden, eine Mehrzahl von LEDs während der Rotation geeignet angesteuert werden, so dass für einen Beobachter eine Information sichtbar und erkennbar wird.

Als eine **Aufgabe** der Erfindung kann angesehen werden, die Funktionalität des optischen Sensors der oben beschriebenen Art zu steigern.

Diese Aufgabe wird durch den optischen Sensor mit den Merkmalen des Anspruchs 1 und durch das Verfahren mit den Merkmalen des Anspruchs 14 gelöst.

Der optische Sensor der oben genannten Art ist erfindungsgemäß dadurch weitergebildet, dass an dem Rotor eine optische Anzeigeeinheit zum Anzeigen von Status- und/oder Messinformationen angeordnet ist und dass die Steuer- und Auswerteeinheit für das Anzeigen der Status- und/oder Messinformationen zum phasenrichtigen Aktivieren der optischen Anzeigeeinheit bei drehendem Rotor eingerichtet ist.

Bevorzugte Ausführungsformen des erfindungsgemäßen optischen Sensors und vorteilhafte Varianten des erfindungsgemäßen Verfahrens sind in der nachfolgenden Beschreibung, insbesondere im Zusammenhang mit den abhängigen Ansprüchen und den beigefügten Figuren, beschrieben.

Als ein erster Kerngedanke der vorliegenden Erfindung kann angesehen werden, dass abweichend vom Stand der Technik eine optische Anzeigeeinheit nunmehr nicht als separate Komponente vorgesehen ist, sondern in dem optischen Sensor integriert und dort auch nicht auf einem Stator, sondern auf dem Rotor angeordnet ist.

Im Zusammenhang damit steht als weiterer Grundgedanke der Erfindung, dass die im Betrieb rotierende optische Anzeigeeinheit geeignet, nämlich phasenrichtig, aktiviert wird, so dass für einen im Wesentlichen ruhenden Beobachter, also einen Beobachter, der relativ zu den sich nicht drehenden Teilen des optischen Sensors ruht und den Sensor betrachtet, eine Information, insbesondere Status- und/oder Messinformationen des Sensors erkennbar sind.

Als wesentlicher Vorteil der vorliegenden Erfindung ist anzusehen, dass die Anzeige der Statusmeldungen und/oder der Messwerte unmittelbar am Ursprung, also am Messgerät selbst abgelesen werden können. Dies spielt insbesondere für den Bereich Sicherheit eine große Rolle. Entsprechend werden in den einschlägigen zu beachtenden Normen hohe Anforderungen an die Ablesbarkeit der Statusmeldungen gestellt. In den meisten Fällen muss davon ausgegangen werden, dass die Sicherheitsfunktion das Messgerät und die Anzeige als Einheit fordert. Diese Anforderungen können mit dem hier beschriebenen optischen Sensor, der auch einfach als Scanner bezeichnet werden kann, ohne weiteres erzielt werden, was bei den bisher bekannten Scannern nicht möglich war.

Bei einer besonders bevorzugten Variante des erfindungsgemäßen Sensors sind durch Positionierung mindestens eines Steuergegenstands in räumlichen Bereichen des Überwachungsbereichs, die auch als Detektionszonen bezeichnet werden, Sensorfunktionen aktivierbar. Das bedeutet, dass die Messfunktionalität des optischen Sensors selbst zum Steuern dieses Sensors, also zum Aktivieren bestimmter Sensorfunktionen, verwendet wird.

Bei den räumlichen Bereichen oder Detektionszonen kann es sich insbesondere um Winkelsegmente des Drehwinkels des Rotors und/oder Bereiche unterschiedlicher Entfernung zum Sensor handeln.

Bei einer besonders bevorzugten einfachen Ausgestaltung des erfindungsgemäßen Sensors können die Sensorfunktionen durch eine Hand oder einen oder mehrere Finger eines Benutzers als Steuergegenstand aktiviert werden.

In diesem Zusammenhang ist außerdem zweckmäßig, wenn die räumlichen Bereiche, in denen durch Positionierung des Steuergegenstands oder der Steuergegenstände Sensorfunktionen aktiviert werden können, durch die Anzeigeeinrichtung selbst angezeigt werden. Der optische Sensor stellt also mit Hilfe der optischen Anzeigeeinheit die Bereiche, in denen beispielsweise mit einem Finger eines Benutzers eine Sensorfunktion aktiviert werden kann, selbst dar. Die Anzeigeeinrichtung erfüllt damit eine Vielzahl unterschiedlicher Aufgaben und es kann ein optischer Sensor hoher Funktionalität bereitgestellt werden.

Beispielsweise kann als Statusinformation auch eine räumliche Ausrichtung des Sensors dargestellt werden. Hierbei wird besonders deutlich, dass diese Funktionalität nur in einer Einheit von Anzeigeeinheit und den übrigen Messkomponenten dargestellt werden kann. In einem anderen Modus, beispielsweise in einem Messmodus, können auch vorhandene Treffer, Ziele, Echos, Entfernungen, gemessene Konturen und/oder Profile im Umgebungsbereich dargestellt werden. All dies ist bei getrennten Einheiten, also bei Systemen, wo die Messeinheit und die optische Anzeigeeinheit getrennt sind, nicht möglich. Dort können Informationen nur als Reaktion der vom Messgerät ermittelten Daten dargestellt werden. Insbesondere müssen bei einer Kombination von Scanner und Darstelleinheit, beispielsweise einem Laptop, die Information und deren Darstellung durch Interpretation des Bedieners in Übereinstimmung gebracht werden.

Durch die Aktivierung von Sensorfunktionen mit Hilfe von Steuergegenständen in räumlichen Bereichen des Überwachungsbereichs wird eine Möglichkeit bereitgestellt, mit dem optischen Sensor zu kommunizieren, die wesentlich auf einer Kombination der Messfunktion des optischen Sensors mit der erfindungsgemäß vorhandenen und auf dem Rotor positionierten optischen Anzeigeeinheit erzielt wird.

Die räumlichen Bereiche, in welchen die Sensorfunktionen aktivierbar sind, können dabei auch als Detektionszonen bezeichnet werden. Der genaue Verlauf dieser Detektionszonen kann durch geeignete Programmierung der Steuer- und Auswerteeinheit, bei der es sich typischerweise um eine Microcontroller oder eine sonstige programmierbare Logikkomponente handelt, erreicht werden.

Insgesamt wird durch die Erfindung ein interaktiver optischer Sensor bereitgestellt.

Für viele Anwendungen ist eine gute Rundumsichtbarkeit der dargestellten Informationen erwünscht. Das bedeutet, dass die Informationen möglichst unabhängig von der jeweiligen Position des Beobachters oder Benutzers relativ zum optischen Sensor weitgehend gleich gut erkennbar sein soll. Hierzu kann es zweckmäßig sein, wenn die angezeigten Status und/oder Messinformationen rotierend angezeigt werden, wobei eine Rotationsgeschwindigkeit der Anzeige der Status- und/oder Messinformationen auf die Wahrnehmungsfähigkeit eines Benutzers abgestimmt ist. Das bedeutet, dass eine Rotationsfrequenz typischerweise kleiner ist als ein 1 Hz.

Im Hinblick auf die Rundumsichtbarkeit der dargestellten Informationen ist außerdem zweckmäßig ein Sensorgehäuse vorhanden mit einer in Drehrichtung des Rotors ringsum, also um den gesamten Winkelbereich von 360°, umlaufenden, d.h. sich ringsum erstreckenden Trennscheibe.

Mit der erfindungsgemäßen optischen Anzeigeeinheit können prinzipiell beliebige Texte und Bilder angezeigt werden. Bei einfachen Varianten weist die optische Anzeigeeinheit eine Mehrzahl von Leuchtelementen, insbesondere Leuchtdioden, auf. Wesentliches Kriterium ist hier, dass die Anzeigeeinheiten hinreichend schnell ein- und ausgeschaltet werden können, um bei drehendem Rotor für einen im Wesentlichen ruhenden Beobachter eine erkennbare Information darstellen zu können. Prinzipiell kann für die Aktivierung der Sensorfunktionen auch eine Geschwindigkeit einer Bewegung des Steuerobjekts ausgewertet werden.

Eine im Wesentlichen stehende Anzeige kann erreicht werden, wenn eine Aktivierungsfrequenz der Anzeigeeinheit gleich groß ist wie eine Drehfrequenz des Rotors oder wenn die Drehfrequenz des Rotors ein ganzzahliges Vielfaches der Aktivierungsfrequenz der Anzeigeeinheit ist.

Möglich ist in diesem Zusammenhang auch, dass ein und dieselbe Information mehrfach rund um den Umfang des optischen Sensors angezeigt wird. Wenn beispielsweise die Aktivierungsfrequenz der Anzeigeeinheit doppelt so groß gewählt wird wie die Drehfrequenz des Rotors, wird die entsprechende Information auf gegenüberliegenden Seiten des optischen Sensors dargestellt. Wenn die Aktivierungsfrequenz der Anzeigeeinheit dreimal so groß ist wie die Drehfrequenz des Rotors wird in entsprechender Weise die Information an drei Winkelpositionen, die jeweils um 120° zueinander versetzt sind, um den Umfang des optischen Sensors dargestellt. Eine mit geringer Geschwindigkeit rotierende Anzeige wird erreicht, wenn die Aktivierungsfrequenz der Anzeigeeinheit geringfügig gegenüber den Werten verstellt wird, welche für eine stehende Anzeige notwendig sind.

Sichtbarkeit und Sicherheit und Zuverlässigkeit der Ablesung können außerdem gesteigert werden, wenn eine Messeinrichtung zum Messen einer Umgebungshelligkeit vorhanden ist und außerdem eine Helligkeit der Anzeige automatisch in Abhängigkeit der Umgebungshelligkeit eingestellt wird. Bei weiteren zweckmäßigen Varianten des erfindungsgemäßen optischen Sensors können darüber hinaus Parameter der Anzeige, insbesondere Helligkeit und/oder Rotationsgeschwindigkeit, durch Positionierung eines Steuergegenstands in den Detektionszonen verändert werden.

Zwischen dem Rotor und einem Stator ist zweckmäßig eine Transformatorstrecke zum Übertragen von Energie und/oder Daten vom Stator auf den Rotor und/oder umgekehrt vorhanden. Mit diesen Transformatorspulen und/oder weiteren auf Rotor und/oder Stator angeordneten Spulen kann ein Drehantrieb für den Rotor bereitgestellt werden.

Außerdem können Messdaten, die von einem auf dem Rotor positionierten Detektor zum Nachweisen von Lichtpulsen, die von Objekten im Überwachungsbereich zurückgestrahlt werden, auf den Stator eine optische Übertragungsstrecke gebildet sein. Diese optische Übertragungsstrecke kann insbesondere bidirektional sein, das heißt, dass eine Datenauswertung prinzipiell auf dem nicht rotierenden Teil, also dem Stator, erfolgen kann und die erfindungsgemäß mit Hilfe der optischen Anzeigeeinheit anzuzeigenden Status- und/oder Messinformationen über die optische Übertragungsstrecke zurück auf den Rotor übertragen werden. Die optische Übertragungsstrecke ist besonders zweckmäßig direkt auf der Drehachse gebildet.

Weitere Vorteile und Merkmale der vorliegenden Erfindung werden nachstehend mit Bezug auf die beigefügten Figuren erläutert. Hierin zeigt:
- Fig.: 1: eine schematische Darstellung eines Ausführungsbeispiels eines erfindungsgemäßen optischen Sensors;
- Fig.: 2: in weiterer schematischer Darstellung weitere Details eines erfindungsgemäß optischen Sensors; und
- Fig.: 3: in schematischer Darstellung ein Beispiel, wie der Überwachungsbereich in Detektionszonen unterteilt werden kann.

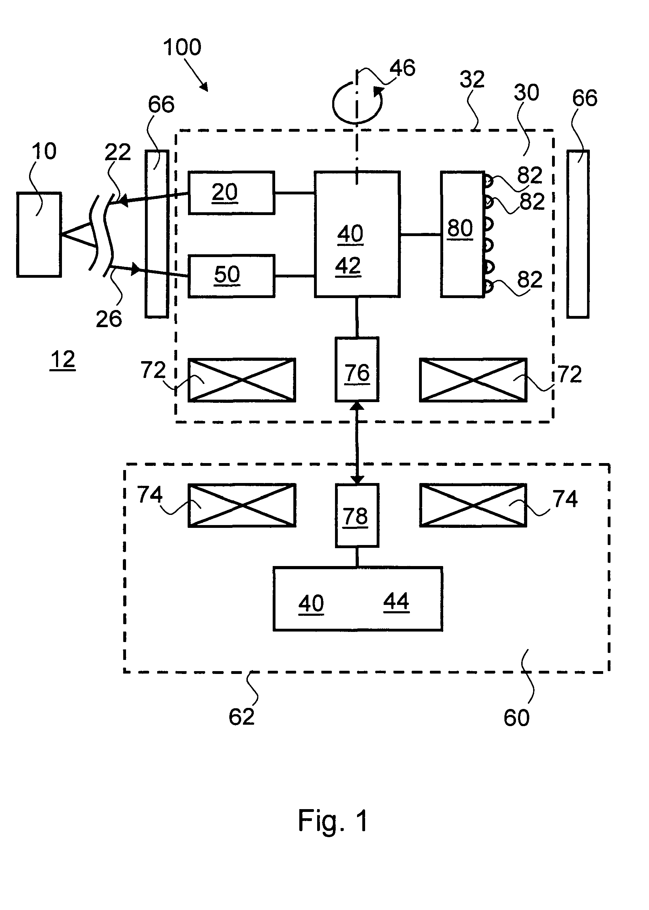

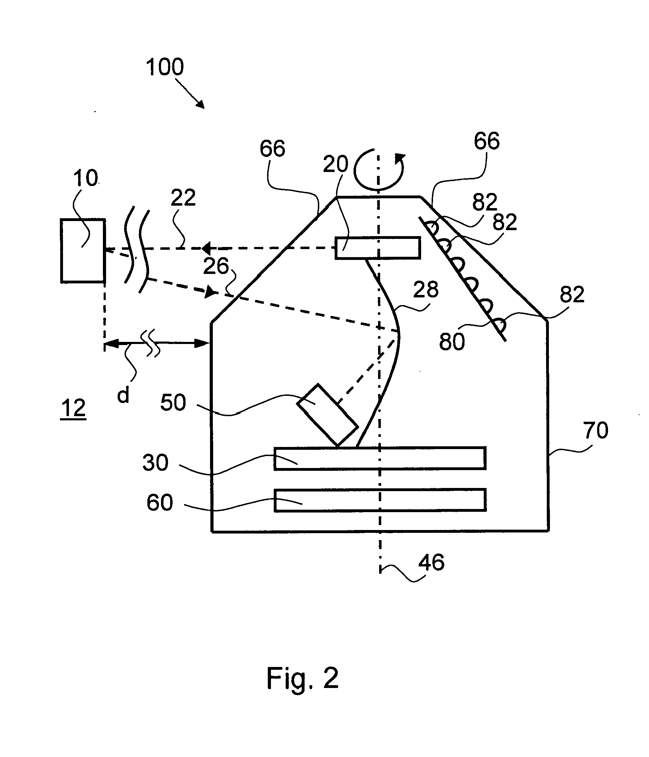

Ein erstes Ausführungsbeispiel eines erfindungsgemäßen optischen Sensors 100 wird mit Bezug auf Fig. 1 und Fig. 2 erläutert. Gleiche oder gleich wirkende Bestandteile sind in den Figuren mit denselben Bezugszeichen versehen. Der dargestellte optische Sensor 100 weist im Betrieb rotierende Komponenten auf, die in Fig. 1 in dem Kasten 32 schematisch dargestellt und auf einen Rotor 30 montiert sind. Sodann sind im Betrieb nicht rotierende Bestandteile vorhanden, die in dem Kasten 62 schematisch wiedergegeben sind.

Die Messfunktion des optischen Sensors 100 wird bereitgestellt durch eine Lichtquelle 20, beispielsweise ein Infrarotlaser, zum Aussenden von Sendelichtpulsen 22 in einen Überwachungsbereich 12, einen Detektor 50 zum Nachweisen von Lichtpulsen 26, die von Objekten 10 im Überwachungsbereich 12 zurückgestrahlt werden und einer Steuer- und Auswerteeinheit 40 zum Ansteuern der Lichtquelle 20, zum Auswerten der von dem Detektor 50 nachgewiesenen Lichtpulse 26 und zum Bestimmen eines Abstands d des Objekts 10 von dem Sensor 100 aufgrund einer gemessenen Laufzeit der Lichtpulse.

Als weitere wesentliche Komponente des erfindungsgemäßen optischen Sensors 100 ist eine Anzeigeeinrichtung 80 an dem Rotor 30 vorhanden, die im gezeigten Ausführungsbeispiel eine Mehrzahl von Leuchtelementen 82, beispielsweise Leuchtdioden, aufweist.

Auf dem Rotor 30 sind außerdem Spulen 72 angeordnet, die mit entsprechenden Spulen 74 auf dem Stator 60 eine Transformatorstrecke zum Übertragen von elektrischer Energie von dem Stator 60 auf den Rotor 30 bilden können. Auf dem Stator können weitere, in der Figur nicht dargestellte Spulen vorhanden sein, welche den Rotor 30 gegenüber dem Stator 60 in eine Drehbewegung versetzen können. Weiterhin ist auf dem Rotor 30 eine optische Sende- und Empfangseinheit 76 angeordnet, welche mit der Steuer- und Auswerteeinheit verbunden ist. Zusammen mit einer auf dem Stator 60 angeordneten zweiten Sende- und Empfangseinheit 78 wird dadurch eine optische Übertragungsstrecke gebildet, die im gezeigten Beispiel zweckmäßig auf der Drehachse 46 des Rotors lokalisiert ist. Über diese optische Übertragungsstrecke können einerseits Messinformationen des optischen Sensors 100, die im ersten Teil 42 der Steuer- und Auswerteeinheit 40 generiert werden, an einen zweiten Teil 44 der Steuer- und Auswerteeinheit 40 auf dem Stator weitergeleitet werden. Andererseits könnten auch Daten vom zweiten Teil 44 der Steuer- und Auswerteeinheit 40 auf den Rotor 30, nämlich den ersten Teil 42 der Steuer- und Auswerteeinheit 40 übertragen werden. Hierbei kann es sich insbesondere um Konfigurationsdaten oder Betriebsanweisungen handeln. Der optische Sensor 100 ist, wie in Fig. 2 gezeigt, in einem Gehäuse 70 untergebracht. In dem Bereich, wo die Sendelichtpulse 22 aus dem Gehäuse 70 austreten und von dem Objekt 10 im Überwachungsbereich 12 zurückgestrahlte Lichtpulse 26 wieder in das Gehäuse 70 eintreten, ist eine Trennscheibe 66 vorhanden. Diese Trennscheibe erstreckt sich rundum, also um 360° umlaufend, um das Gehäuse 70. Die Trennscheibe ist aus einem Material gefertigt, welches mindestens für die Wellenlängen der verwendeten Lichtquelle transparent sein muss. Bevorzugt werden hierbei Infrarotlaser als Lichtquellen eingesetzt.

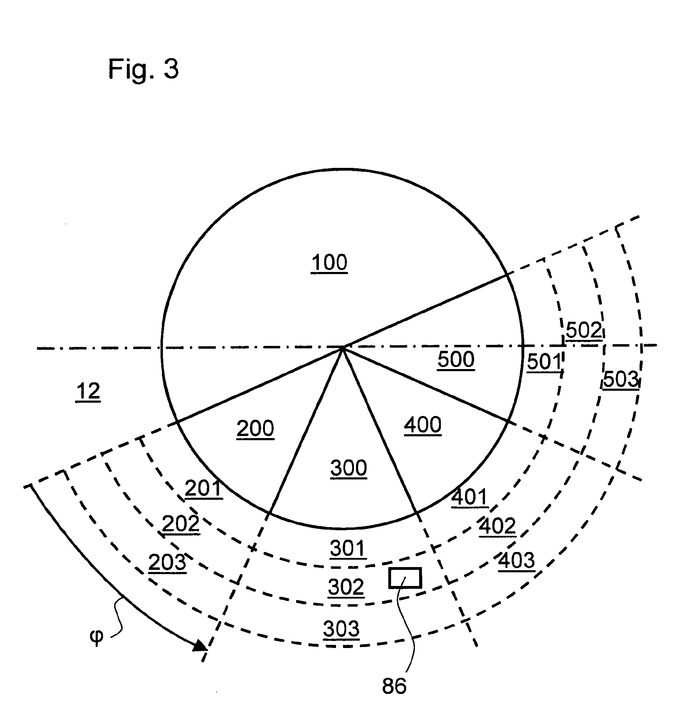

Die Funktionsweise des erfindungsgemäßen optischen Sensors wird mit Bezug auf die Figuren 2 und 3 näher erläutert. Zum Nachweis eines Objekts 10 in einem Überwachungsbereich 12 sendet die Lichtquelle 20 Lichtpulse 22 aus, die durch die Trennscheibe 66 des Gehäuses 70 hindurchtreten und sodann auf ein nachzuweisendes Objekt 10 treffen. Von dem Objekt 10 zurückgestrahlte Lichtpulse 26 werden nach erneutem Durchtritt durch die Trennscheibe 66 an einem Hohlspiegel 28, der auf dem Rotor 30 montiert ist, reflektiert in Richtung des Detektors 50. In dem Detektor 50 nachgewiesene Lichtpulse werden in grundsätzlich bekannter Weise weiterverarbeitet und auf Grundlage einer gemessenen Laufzeit der Lichtpulse wird die Entfernung d des Objekts 10 von dem Sensor 100 bestimmt. Weil der Rotor 30 und damit alle auf dem Rotor 30 angeordneten Komponenten, insbesondere die Lichtquelle 20 und der Detektor 50, sich im Betrieb um die Drehachse 46 drehen, kann mit dem erfindungsgemäßen optischen Sensor 100 eine Kontur der Umgebung ermittelt werden.

Als weiterer wesentlicher Bestandteil des erfindungsgemäßen Sensors ist eine optische Anzeigeeinheit 80 mit einer Mehrzahl von Leuchtelementen 82, insbesondere Leuchtdioden 82, vorhanden. Die optische Anzeigeeinheit 80 ist an dem Rotor 30 angeordnet und wird demgemäß mit derselben Drehfrequenz wie die übrigen Komponenten gedreht. Erfindungsgemäß wird die optische Anzeigeeinheit während des Betriebs, also während der Drehbewegung des Rotors 30 um die Drehachse 46 so angesteuert, dass eine Information für einen Benutzer, der relativ zu dem Gehäuse ruht oder sich jedenfalls nur geringfügig gegenüber dem Gehäuse 70 bewegt, erkennbar wird. Diese gezielte Ansteuerung der optischen Anzeigeeinheit 80 durch die Steuer- und Auswerteeinheit wird auch als phasenrichtiges Aktivieren der optischen Anzeigeeinheit bei drehendem Rotor bezeichnet. Konkret bedeutet das beispielsweise, dass bestimmte Leuchtdioden 82 nur bei bestimmten Drehpositionen des Rotors 30 aufleuchten, ansonsten aber dunkel bleiben. Prinzipiell kann es sich bei der optischen Anzeigeeinheit 80 auch um eine Matrix von Leuchtdioden handeln. Für das Darstellen von zweidimensionalen Informationen ist aber im Grundsatz eine Reihe von Leuchtdioden ausreichend, welche quer zur Richtung der Drehgeschwindigkeit angeordnet ist.

Die beschriebene Anzeigefunktionalität und die außerdem vorhandene Messfunktionalität, welche das Bestimmen einer Umgebungskontur erlaubt, können in einer bevorzugten Ausgestaltung der Erfindung kombiniert werden zu einer interaktiven Funktionalität des Sensors, die im Zusammenhang mit Fig. 3 erläutert wird. Schematisch ist dort der optische Sensor 100 in Richtung der Drehachse 46 dargestellt. Der Überwachungsbereich 12 ist unterteilt zunächst in Winkelsegmente 200, 300, 400, 500. Diese Winkelsegmente sind dann noch weiter unterteilt in Abstandssegmente 201,...,503. Die Winkelsegmente 200,...,500 sind Winkelsegmente des Drehwinkels ϕ. Eine interaktive Funktionalität des erfindungsgemäßen optischen Sensors 100 kann dadurch erreicht werden, dass mit Hilfe der optischen Anzeigeeinheit 80 beispielsweise die Winkelsegmente 200,...,500 angezeigt werden. Sodann kann mit Hilfe einer geeigneten Programmierung der Steuer- und Auswerteeinheit eine Funktionalität so hinterlegt werden, dass bei Positionierung eines Steuergegenstands 86, beispielsweise, wie in Fig. 3 gezeigt, im Winkelsegment 300 und dem Abstandssegment 302 eine bestimmte Funktion bei dem Sensor ausgelöst wird. Der Steuergegenstand 86 kann die Hand oder der Finger einer Bedienperson sein. Die jeweils ausgelöste Funktion kann grundsätzlich beliebiger Natur sein. Beispielsweise können Betriebsparameter des Sensors und/oder der Anzeige verstellt werden. Zum Beispiel können die Winkelsegmente 200,...,500 jeweils bestimmte Punkte einer Menüstruktur darstellen. So könnten beispielsweise verschiedene Umdrehungsgeschwindigkeiten des Rotors angezeigt werden, die durch das virtuelle Drücken der angezeigten Werte aktiviert werden. Weitere Bedienmöglichkeiten erschließen sich, wenn auch eine Geschwindigkeit eines Steuergegenstands, ermittelt wird. Hier kann zum Beispiel eine schnelle Handbewegung eine Änderung eines Menüpunkts veranlassen oder sich direkt in eine bestimmte Parameteränderung, beispielsweise Drehzahlerhöhung, umsetzen. Durch die erfindungsgemäße optische Anzeige werden demgemäß bei diesem Ausführungsbeispiel virtuelle Tasten bereitgestellt, welche für den Benutzer ein besonders bequemes Bedienen des Sensors ermöglichen. Mit dem beschriebenen interaktiven Display wird die Funktionalität des optischen Sensors erheblich gesteigert und es ist insbesondere möglich, ohne elektrische oder mechanische Verbindung mit dem Sensor zu kommunizieren.

Mit der vorliegenden Erfindung wird ein neuer optischer Sensor bereitgestellt, welcher in besonders zuverlässiger Weise die Darstellung von Sensorparametern im Betrieb ermöglicht und bei dem außerdem eine verbesserte Bedienung erzielt wird.

## Patentansprüche

1. Optischer Sensor zum Nachweis von Objekten in einem Überwachungsbereich nach dem Laufzeitprinzip
mit einer Lichtquelle (20) zum Aussenden von Sendelichtpulsen (22) in den Überwachungsbereich (12),
mit einer Dreheinrichtung zum Drehen einer Strahlrichtung der Sendelichtpulse (22) um eine quer zur Strahlrichtung orientierte Rotationsachse (46),
mit einem Detektor (50) zum Nachweisen von Lichtpulsen (26), die von Objekten (10) im Überwachungsbereich (12) zurückgestrahlt werden, und
mit einer Steuer- und Auswerteeinheit (40, 42, 44) zum Ansteuern der Lichtquelle (20), zum Auswerten der von dem Detektor (50) nachgewiesenen Lichtpulse (26) und zum Bestimmen eines Objektabstands (d) aufgrund einer gemessenen Laufzeit der Lichtpulse,
**dadurch gekennzeichnet,**
**dass** an dem Rotor (30) eine optische Anzeigeeinheit (80) zum Anzeigen von Status- und/oder Messinformationen angeordnet ist und
**dass** die Steuer- und Auswerteeinheit (40, 42, 44) für das Anzeigen der Status- und/oder Messinformationen zum phasenrichtigen Aktivieren der optischen Anzeigeeinheit (80) bei drehendem Rotor (30) eingerichtet ist.

2. Sensor nach Anspruch 1,
**dadurch gekennzeichnet,**
**dass** durch Positionierung mindestens eines Steuergegenstands (86) in Detektionszonen (201,...,503) des Überwachungsbereichs (12) Sensorfunktionen aktivierbar sind.

3. Sensor nach Anspruch 2,
**dadurch gekennzeichnet,**
**dass** die Detektionszonen (201,...,503) Winkelsegmente eines Drehwinkels (ϕ) des Rotors (30) und/oder Bereiche unterschiedlicher Entfernung zum Sensor sind.

4. Sensor nach Anspruch 2 oder 3,
**dadurch gekennzeichnet,**
**dass** die Sensorfunktionen durch eine Hand oder einen oder mehrere Finger eines Benutzers als Steuergegenstand (86) aktivierbar sind.

5. Sensor nach einem der Ansprüche 1 bis 4,
**dadurch gekennzeichnet,**
**dass** die Status- und/oder Messinformationen rotierend anzeigbar sind, wobei eine Rotationsgeschwindigkeit auf die Wahrnehmungsfähigkeit eines Benutzers abgestimmt ist.

6. Sensor nach einem der Ansprüche 1 bis 5,
**dadurch gekennzeichnet,**
**dass** als Statusinformation eine räumliche Ausrichtung des Sensors und/oder die Detektionszonen (201,...,503), in denen durch Positionierung mindestens eines Steuergegenstands (86) Sensorfunktionen aktivierbar sind, durch die Anzeigeeinrichtung (80) anzeigbar sind.

7. Sensor nach einem der Ansprüche 1 bis 6,
**dadurch gekennzeichnet,**
**dass** für die Aktivierung von Sensorfunktionen eine Geschwindigkeit einer Bewegung des Steuerobjekts (86) auswertbar ist.

8. Sensor nach einem der Ansprüche 1 bis 7,
**dadurch gekennzeichnet,**
**dass** die optische Anzeigeeinheit (80) eine Mehrzahl von Leuchtelementen (82), insbesondere Leuchtdioden, aufweist.

9. Sensor nach einem der Ansprüche 1 bis 8,
**dadurch gekennzeichnet,**
**dass** zwischen einem Stator (60) und dem Rotor (30) eine Transformatorstrecke (72, 74) zum Übertragen von Energie und/oder Daten vom Stator (60) auf den Rotor (30) und/oder vom Rotor (30) auf den Stator (60) vorhanden ist.

10. Sensor nach einem der Ansprüche 1 bis 9,
**dadurch gekennzeichnet,**
**dass** zum Übertragen von Daten vom Rotor (30) auf einen Stator (60) zwischen dem Rotor (30) und dem Stator (60), insbesondere auf der Drehachse (46) des Rotors (40), eine optische Übertragungsstrecke (76, 78) gebildet ist.

11. Sensor nach einem der Ansprüche 1 bis 10,
**dadurch gekennzeichnet,**
**dass** Parameter der Anzeige, insbesondere Helligkeit und/oder Rotationsgeschwindigkeit, durch Positionierung eines Steuergegenstands (86) veränderbar sind.

12. Sensor nach einem der Ansprüche 1 bis 11,
**dadurch gekennzeichnet,**
**dass** eine Messeinrichtung zum Messen einer Umgebungshelligkeit vorhanden ist und
**dass** eine Helligkeit der Anzeige automatisch in Abhängigkeit der Umgebungshelligkeit einstellbar ist.

13. Sensor nach einem der Ansprüche 1 bis 12,
**dadurch gekennzeichnet,**
**dass** ein Sensorgehäuse (70) vorhanden ist mit einer in Drehrichtung des Rotors (30) ringsum umlaufenden Trennscheibe (66).

14. Verfahren zum optischen Anzeigen von Informationen mit einem optischen Sensor nach dem Laufzeitprinzip, insbesondere nach einem der Ansprüche 1 bis 13,
wobei der optische Sensor Objekte in einem Überwachungsbereich (12) durch Lichtlaufzeitmessungen nachweist, welche mit einem auf einem Rotor (30) angeordneten Sender (20) und einem Empfänger (50) durchgeführt werden,
**dadurch gekennzeichnet,**
**dass** eine auf dem Rotor (30) angeordnete Anzeigeeinheit (80) zum Anzeigen von Status- und/oder Messinformationen vorhanden ist und
**dass** die Anzeigeeinheit (80) für das Anzeigen der Status- und/ oder Messinformationen bei drehendem Rotor (30) phasenrichtig aktiviert wird.

15. Verfahren nach Anspruch 14,
**dadurch gekennzeichnet,**
**dass** eine Aktivierungsfrequenz der Anzeigeeinheit (80) gleich groß ist wie eine Drehfrequenz des Rotors (30),
**dass** die Aktivierungsfrequenz der Anzeigeeinheit (80) ein ganzzahliges Vielfaches der Drehfrequenz des Rotors (30) ist oder
**dass** die Drehfrequenz des Rotors (30) ein ganzzahliges Vielfaches der Aktivierungsfrequenz der Anzeigeeinheit (80) ist.
